# EUROPÄISCHE PATENTSCHRIFT

(11) **EP 2 296 953 B1**
(45) Veröffentlichungstag und Bekanntmachung des Hinweises auf die Patenterteilung: **19.04.2023**
(21) Anmeldenummer: 09776895.6
(22) Anmeldetag: 01.07.2009
(51) Int. Cl.: B60W 50/08, B60W 40/12, B60W 20/00

(54) **VERFAHREN ZUR ERMITTLUNG MINDESTENS EINES BETRIEBSZUSTANDS EINES HYBRIDFAHRZEUGS UND HYBRIDFAHRZEUG**
METHOD FOR DETERMINING AT LEAST ONE OPERATING STATE OF A HYBRID VEHICLE, AND HYBRID VEHICLE
PROCÉDÉ PERMETTANT DE DÉTERMINER AU MOINS UN ÉTAT DE FONCTIONNEMENT D'UN VÉHICULE HYBRIDE ET VÉHICULE HYBRIDE

(30) Priorität: 16.07.2008 DE 102008033481
(43) Veröffentlichungstag der Anmeldung: 23.03.2011
(73) Patentinhaber: Bayerische Motoren Werke Aktiengesellschaft, 80809 München (DE)
(72) Erfinder: SEITZ, Uwe, 80999 München (DE); PENKA, Andreas, 80807 München (DE); BODE, Mathis, 80995 München (DE); SCHREIBER, Nicolas, 84034 Landshut (DE)
(86) Internationale Anmeldenummer: PCT/EP2009/004729
(87) Internationale Veröffentlichungsnummer: WO 2010/006701

(56) Entgegenhaltungen:
- WO-A-2009/081234
- JP-A- H11 220 802
- JP-A- 2002 274 219
- JP-A- 2005 009 381
- JP-A- 2006 057 483
- JP-A- 2006 133 010
- JP-A- 2006 290 182
- JP-A- 2007 237 970
- JP-A- 2007 314 100
- JP-A- 2008 055 963
- US-A1- 2007 213 891
- US-A1- 2007 296 567
- US-A1- 2008 042 821
- US-A1- 2009 066 495

## Beschreibung

Die Erfindung betrifft ein Verfahren zur Ermittlung mindestens eines Betriebszustands eines Hybridfahrzeugs und ein Hybridfahrzeug.

Ein Hybridfahrzeug umfasst insbesondere zwei unterschiedliche Antriebskonzepte für eine Antriebsaufgabe. Beispielsweise können in einem Fahrzeug Elektro- und Otto- oder Dieselmotoren eingesetzt werden.

Die einzelnen Motoren eines Hybridantriebs können parallel betrieben werden und gleichzeitig auf das Fahrzeug oder auf mit dem Fahrzeug verbundene Komponenten wirken. Alternativ können die Motoren seriell betrieben werden, dann wirkt nur ein Antrieb unmittelbar auf das Fahrzeug während der andere Antrieb Leistung bereitstellt, die umgewandelt dem direkt wirkenden Antrieb zugeführt wird. Auch Mischformen sind möglich.

Ein Benutzer des Hybridfahrzeugs bekommt idealerweise beim Fahren wenig von dessen möglichen Betriebsmodi mit. Das Hybridfahrzeug entscheidet vorzugsweise selbst, welchen Betriebsmodus es wählt und schaltet (nahezu) unmerklich zwischen den Betriebsmodi um. Hierbei fehlt dem Benutzer jedoch jedwede Vergleichsmöglichkeit mit einem herkömmlichen Fahrzeug, das lediglich einen Verbrennungsmotor aufweist. Dies ist von Nachteil, da der Benutzer auch über die verschiedenen Betriebsmodi und die damit einhergehende Effizienz seines Hybridfahrzeugs informiert sein will. JP H11 220802 A offenbart den Oberbegriff des Anspruchs 1.

Die **Aufgabe** der Erfindung besteht darin, die vorstehend genannten Nachteile zu vermeiden und insbesondere eine Möglichkeit zu schaffen zur effizienten Bestimmung und Nutzung von Betriebsmodi eines Hybridfahrzeugs. Hieraus können dann Rückschlüsse bzw. Maßnahmen betreffend einen wirtschaftlichen oder verbrauchsoptimierten Betrieb des Hybridfahrzeugs abgeleitet werden.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren angegeben zur Ermittlung mindestens eines Betriebszustands eines Hybridfahrzeugs, bei welchem mindestens zwei Betriebszustände über mindestens eine Zeitdauer ermittelt und für die mindestens eine Zeitdauer hinsichtlich ihrer Anteile an der Zeitdauer zueinander in Relation gesetzt werden, wobei die jeweiligen Anteile der Betriebszustände in Summe auf 100% normiert sind und auf einem Display des Fahrzeugs dargestellt werden, wobei über das Display des Fahrzeugs Möglichkeiten zum Speichern und/oder zum Vergleichen vorgegebener Routen bezogen auf eine Benutzung des Hybridfahrzeugs angeboten werden.

Bei dem Betriebszustand handelt es sich insbesondere um einen Betriebszustand mindestens eines Antriebs des Hybridfahrzeugs und/oder um einen Betriebszustand, der mit mindestens einem Antrieb des Hybridfahrzeugs assoziiert ist.

Da der mindestens eine Betriebszustand für eine vorgegebene Zeitdauer ermittelt wird, kann auf die Effizienz des Hybridfahrzeugs insbesondere in Bezug auf dessen Einsatz und/oder Umfeld (Fahrprofil, Einsatzgebiet, Verkehrsdichte, etc.) rückgeschlossen werden.

Eine Weiterbildung ist es, dass der mindestens eine Betriebszustand über die mindestens eine Zeitdauer mittels einer Kumulation und/oder Durchschnittsbildung mehrerer Messwerte ermittelt wird.

Insbesondere können die Messwerte von dem Fahrzeug bzw. von mindestens einem Antrieb des Fahrzeugs stammen oder mit diesem in Zusammenhang stehen.

Eine andere Weiterbildung ist es, dass mindestens zwei Betriebszustände ermittelt und zueinander für die mindestens eine Zeitdauer in Relation gesetzt werden.

Insbesondere ist es eine Weiterbildung, dass die mindestens eine Zeitdauer mehrere Zeitintervalle umfasst, wobei für jedes Zeitintervall der mindestens eine Betriebszustand ermittelt wird.

Insbesondere können mehrere Betriebszustände absolut oder relativ zueinander vergleichbar bestimmt und rückgemeldet bzw. dargestellt werden. Basierend auf derartigen Daten sind Rückschlüsse betreffend Betriebspunkte des Fahrzeugs möglich.

Auch ist es eine Weiterbildung, dass die Zeitintervalle vorgebbar oder einstellbar sind.

Insbesondere kann auch die mindestens eine Zeitdauer einstellbar und/oder konfigurierbar ausgeführt sein.

Sowohl die zu bestimmenden Betriebspunkte als auch die Dauer der Zeitintervalle kann konfigurierbar ausgeführt sein. Beispielsweise kann ein Benutzer eine Konfiguration über eine Mensch-Maschine-Schnittstelle des Hybridfahrzeugs vornehmen.

Ferner ist es eine Weiterbildung, dass der mindestens eine Betriebszustand mindestens einen der folgenden Betriebszustände umfasst:
- einen elektrischen Betriebszustand des Hybridfahrzeugs;
- einen Betriebszustand des Hybridfahrzeugs mit aktiver Verbrennungsmaschine, wobei vorzugsweise lediglich ein Verbrennungsmotor aktiv ist;
- einen Mischbetriebszustand des Hybridfahrzeugs.

Im Rahmen einer zusätzlichen Weiterbildung wird anhand des mindestens einen Betriebszustands eine vorgebbare Aktion durchgeführt.

Beispielsweise ist es eine vorgebbare Aktion, die Betriebspunkte des Hybridfahrzeugs zu verändern bzw. die Antriebe mit einer angepassten Kennlinie zu betreiben.

Eine nächste Weiterbildung besteht darin, dass der mindestens eine Betriebszustand über die mindestens eine Zeitdauer rückgemeldet und/oder dargestellt wird.

Insbesondere kann eine Informationseinheit des Hybridfahrzeugs, beispielsweise ein Bildschirm oder ein Display für eine derartige Darstellung genutzt werden.

Eine Ausgestaltung ist es, dass anhand des mindestens einen Betriebszustands eine günstige Fahrweise des Hybridfahrzeugs bestimmt wird.

Eine alternative Ausführungsform besteht darin, dass anhand des mindestens einen Betriebszustands ein Soll-IstVergleich mit mindestens einem abgespeicherten Betriebszustand durchgeführt wird.

Die vorstehend genannte Aufgabe wird auch gelöst durch ein Hybridfahrzeug umfassend eine Prozessoreinheit und/oder eine zumindest teilweise festverdrahtete oder logische Schaltungsanordnung, die derart eingerichtet ist, dass das Verfahren nach einem der vorhergehenden Ansprüche durchführbar ist.

Ausführungsbeispiele der Erfindung werden nachfolgend anhand der Zeichnungen dargestellt und erläutert.

Es zeigen:
- Fig.1: einen Anteil eines ersten und einen Anteil eines zweiten Betriebszustands eines Hybridfahrzeugs, wobei eine Verteilung der Anteile vorzugsweise für einen bestimmten Zeitraum Δt bestimmt wird;
- Fig.2: Anteile dreier Betriebszustände des Hybridfahrzeugs über einen Zeitraum Δt;
- Fig.3: ein Beispiel, das fortlaufend für je eine Zeitdauer Δt Anteile dreier Betriebszustände entsprechend Fig.2 ermittelt;
- Fig.4: eine Vorrichtung zur Verarbeitung und/oder zur Bestimmung bestimmter Betriebszustände.

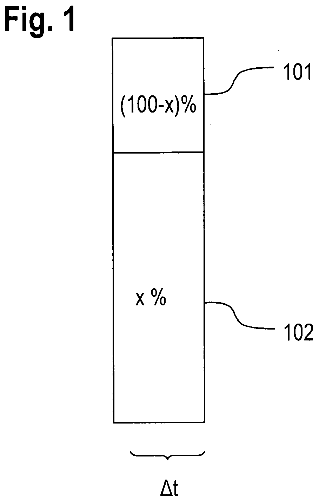

Fig.1 zeigt einen ersten Betriebszustand 101 und einen zweiten Betriebszustand 102 eines Hybridfahrzeugs, wobei beispielhaft der erste Betriebszustand 101 ein elektrischer Betriebszustand mit einem Anteil von (100-x)% und der zweite Betriebszustand 102 ein Betriebszustand mit aktivem Verbrennungsmotor mit einem Anteil von x% ist.

Die Verteilung der Anteile wird vorzugsweise für einen bestimmten Zeitraum Δt bestimmt, der von einem Benutzer über eine Mensch-Maschine-Schnittstelle konfigurierbar ist.

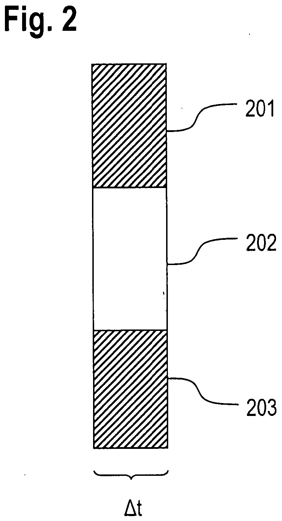

In Fig.2 sind zum Vergleich Anteile dreier Betriebszustände 201, 202 und 203 des Hybridfahrzeugs über einen Zeitraum Δt dargestellt. Beispielhaft ist der Betriebszustand 201 ein elektrischer Betriebszustand des Hybridfahrzeugs und der Betriebszustand 203 ein Betriebszustand, bei dem insbesondere nur der Verbrennungsmotor das Fahrzeug antreibt. Bei dem Betriebszustand 202 kann es sich um einen Mischbetrieb mit teilweise aktivem Elektromotor bzw. teilweise aktivem Verbrennungsmotor handeln. Entsprechend sind eine Vielzahl möglicher (weiterer) Betriebszustände bestimmbar bzw. darstellbar.

Die jeweiligen Anteile der Betriebszustände können in Summe auf 100% normiert sein. Alternativ kann auch für mindestens einen Betriebszustand ein absoluter Wert (z.B. ein Energieverbrauch normiert auf eine vergleichbare Größe, z.B. Liter pro 100km) bestimmt und dargestellt werden.

Vorzugsweise können die ermittelten Größen und Betriebszustände auf einem Display, das von einem Benutzer des Fahrzeugs und/oder Passagieren des Fahrzeugs gut einsehbar bzw. ablesbar ist, dargestellt werden.

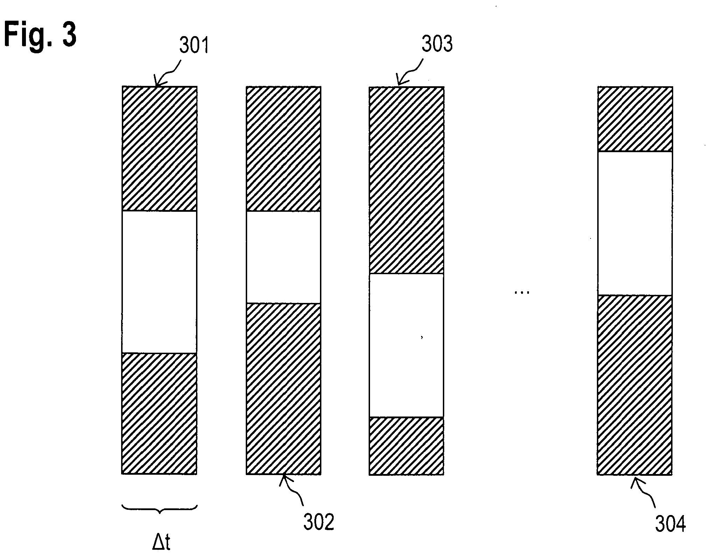

Fig.3 zeigt ein Beispiel, das fortlaufend für je eine Zeitdauer Δt Anteile dreier Betriebszustände 301 bis 304 entsprechend Fig.2 ermittelt. Vorzugsweise ist die Zeitdauer Δt von dem Benutzer einstellbar oder konfigurierbar. In Fig.3 ist zu erkennen, dass beispielhaft die Anteile der Betriebszustände im Verlauf der Zeit variieren. Hieraus können Vergleiche bezogen auf eine Benutzung des Hybridfahrzeugs insbesondere im Hinblick bestimmter Strecken und/oder Fahrprofile gezogen werden. Insbesondere ist es möglich, eine verbesserte Nutzung des Hybridfahrzeugs anhand der auf diese Art ermittelten und ausgewerteten Daten zu erreichen.

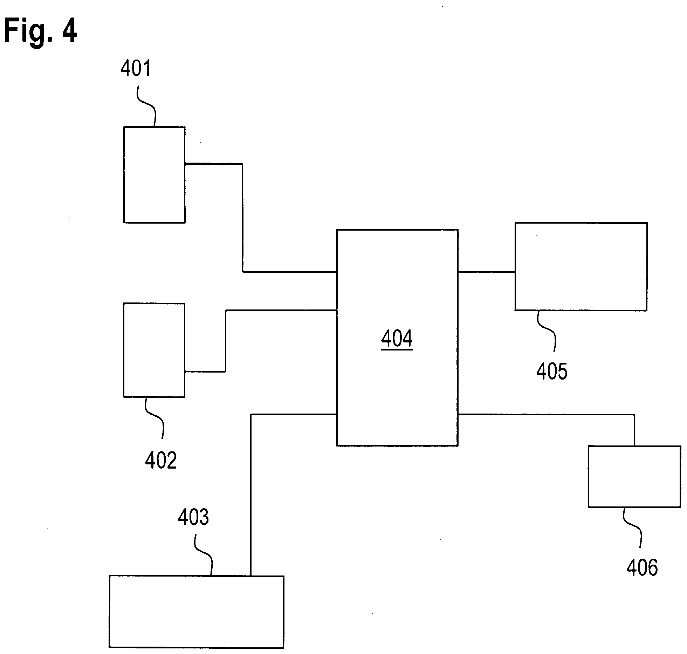

**Fig.4** zeigt eine Vorrichtung zur Verarbeitung und/oder zur Bestimmung bestimmter Betriebszustände. Beispielsweise sind ein erster Antrieb 401 und ein zweiter Antrieb 402, z.B. ein Elektromotor und ein Verbrennungsmotor, vorgesehen, von denen Daten oder Zustände mittels vorzugsweise einer Steuereinheit 404 abfragbar oder ermittelbar sind. Anhand der von der Steuereinheit abgefragter Daten, ggf. unter Berücksichtigung weiterer Daten, die von sonstigen Informationsquellen oder Sensoren 403 des Hybridfahrzeugs stammen, werden pro Zeitdauer Δt die Anteile und/oder Energieverbräuche bestimmter Betriebszustände ermittelt. Hierbei kann jedwede Kombination von Mischbetrieb anhand der von den Antrieben 401, 402 sowie von den sonstigen Informationsquellen oder Sensoren 403 des Hybridfahrzeugs bestimmt werden. Entsprechend kann beispielsweise eine Verteilung für zwei (siehe Fig.1) oder für drei (siehe Fig.2 und Fig.3) Betriebszustände bestimmt werden und auf einem Display 405 des Hybridfahrzeugs dargestellt werden. Die Steuereinheit 404 kann über eine Mensch-Maschine-Schnittstelle 406 konfiguriert werden. So können beispielsweise Betriebszustände ausgewählt und/oder eine Zeitdauer Δt eingestellt werden. Weiterhin ist es möglich, dass die Art der Darstellung auf dem Display 405 mittels der Mensch-Maschine-Schnittstelle 406 ausgewählt oder konfiguriert wird. Auch können dem Benutzer über das Display 405 Möglichkeiten zum Speichern oder zum Vergleichen vorgegebener Daten, Routen oder Profile angeboten werden. Eine Auswahl kann entsprechend über die Mensch-Maschine-Schnittstelle 406 erfolgen.

Weiterhin kann die Steuereinheit 404 derart eingerichtet sein, dass abhängig von ermittelten Daten oder Betriebszuständen bzw. abhängig von Verteilungen von Betriebszuständen über der Zeit eine effiziente Einstellung in dem Hybridfahrzeug vorgenommen wird. Insbesondere können die Antriebe 401, 402 entsprechend den ermittelten Werten zumindest teilweise eingestellt bzw. selektiert werden.

## Patentansprüche

1. Verfahren zur Ermittlung und Darstellung mindestens eines Betriebszustands (101, 102) eines Hybridfahrzeugs, bei welchem mindestens zwei Betriebszustände über mindestens eine Zeitdauer ermittelt und für die mindestens eine Zeitdauer hinsichtlich ihrer Anteile an der Zeitdauer zueinander in Relation gesetzt werden, wobei die jeweiligen Anteile der Betriebszustände in Summe auf 100% normiert sind und auf einem Display des Fahrzeugs dargestellt werden, **gekennzeichnet durch** dass über das Display des Fahrzeugs Möglichkeiten zum Speichern und/oder zum Vergleichen vorgegebener Routen bezogen auf eine Benutzung des Hybridfahrzeugs angeboten werden.

2. Verfahren nach Anspruch 1, bei dem der mindestens eine Betriebszustand (101, 102) über die mindestens eine Zeitdauer mittels einer Kumulation und/oder Durchschnittsbildung mehrerer Messwerte ermittelt wird.

3. Verfahren nach einem der vorhergehenden Ansprüche, bei dem die mindestens eine Zeitdauer mehrere Zeitintervalle umfasst, wobei für jedes Zeitintervall der mindestens eine Betriebszustand (301, 302, 303, 304) ermittelt wird.

4. Verfahren nach Anspruch 4, bei dem die Zeitintervalle vorgebbar oder einstellbar sind.

5. Verfahren nach einem der vorhergehenden Ansprüche, bei dem der mindestens eine Betriebszustand mindestens einen der folgenden Betriebszustände umfasst:
- einen elektrischen Betriebszustand des Hybridfahrzeugs (201);
- einen Betriebszustand des Hybridfahrzeugs mit aktiver Verbrennungsmaschine (203);
- einen Mischbetriebszustand des Hybridfahrzeugs (202) .

6. Verfahren nach einem der vorhergehenden Ansprüche, bei dem anhand des mindestens einen Betriebszustands eine vorgebbare Aktion durchgeführt wird.

7. Verfahren nach einem der vorhergehenden Ansprüche, bei dem der mindestens eine Betriebszustand über die mindestens eine Zeitdauer rückgemeldet und/oder dargestellt wird.

8. Verfahren nach einem der vorhergehenden Ansprüche, bei dem anhand des mindestens einen Betriebszustands eine günstige Fahrweise des Hybridfahrzeugs bestimmt wird.

9. Verfahren nach einem der vorhergehenden Ansprüche, bei dem anhand des mindestens einen Betriebszustands ein Vergleich mit mindestens einem abgespeicherten Betriebszustand durchgeführt wird.

10. Hybridfahrzeug umfassend eine Prozessoreinheit und/oder eine zumindest teilweise festverdrahtete oder logische Schaltungsanordnung, die derart eingerichtet ist, dass das Verfahren nach einem der vorhergehenden Ansprüche durchführbar ist.

## Claims

1. Method for determining and displaying at least one operating state (101, 102) of a hybrid vehicle, in which at least two operating states are determined over at least one time period and, for the at least one time period, are related to each other with regard to their proportions in the time period, wherein the respective proportions of the operating states are standardized to 100% in total and are displayed on a display of the vehicle, **characterized in that** possibilities for the storage and/or for the comparison of predefined routes on the basis of utilization of the hybrid vehicle are offered via the display of the vehicle.

2. Method according to Claim 1, in which the at least one operating state (101, 102) is determined over the at least one time period by means of accumulating and/or averaging a plurality of measured values.

3. Method according to one of the preceding claims, in which the at least one time period comprises a plurality of time intervals, the at least one operating state (301, 302, 303, 304) being determined for each time interval.

4. Method according to Claim 4, in which the time intervals can be predefined or set.

5. Method according to one of the preceding claims, in which the at least one operating state comprises at least one of the following operating states:
- an electrical operating state of the hybrid vehicle (201) ;
- an operating state of the hybrid vehicle with active internal combustion engine (203);
- a mixed operating state of the hybrid vehicle (202).

6. Method according to one of the preceding claims, in which a predefinable action is carried out on the basis of the at least one operating state.

7. Method according to one of the preceding claims, in which the at least one operating state over the at least one time period is fed back and/or displayed.

8. Method according to one of the preceding claims, in which a beneficial mode of operation of the hybrid vehicle is determined on the basis of the at least one operating state.

9. Method according to one of the preceding claims, in which a comparison with at least one stored operating state is made on the basis of the at least one operating state.

10. Hybrid vehicle comprising a processor unit and/or an at least partially fixed-wired or logical circuit arrangement, which is set up in such a way that the method according to one of the preceding claims can be carried out.

## Revendications

1. Procédé de détermination et de représentation d'au moins un état de fonctionnement (101, 102) d'un véhicule hybride, avec lequel au moins deux états de fonctionnement sont déterminés sur au moins une durée et sont mis en relation l'un avec l'autre pour l'au moins une durée pour ce qui concerne leurs proportions de la durée, les proportions respectives des états de fonctionnement étant normalisées au total à 100 % et étant représentées sur un dispositif d'affichage du véhicule, caractérisé en ce des possibilités de mémorisation et/ou de comparaison d'itinéraires prédéfinis en référence à une utilisation du véhicule hybride sont proposées par le biais du dispositif d'affichage du véhicule.

2. Procédé selon la revendication 1, avec lequel l'au moins un état de fonctionnement (101, 102) sur l'au moins une durée est déterminé au moyen d'un cumul et/ou d'un calcul de la moyenne de plusieurs valeurs mesurées.

3. Procédé selon l'une des revendications précédentes, avec lequel l'au moins une durée comporte plusieurs intervalles de temps, l'au moins un état de fonctionnement (301, 302, 303, 304) étant déterminé pour chaque intervalle de temps.

4. Procédé selon la revendication 4, avec lequel les intervalles de temps peuvent être prédéfinis ou sont réglables.

5. Procédé selon l'une des revendications précédentes, avec lequel l'au moins un état de fonctionnement comprend au moins l'un des états de fonctionnement suivants :
- un état de fonctionnement électrique du véhicule hybride (201) ;
- un état de fonctionnement du véhicule hybride avec un moteur à combustion interne actif (203) ;
- un état de fonctionnement mixte du véhicule hybride (202) .

6. Procédé selon l'une des revendications précédentes, avec lequel une action pouvant être prédéfinie est accomplie à l'aide de l'au moins un état de fonctionnement.

7. Procédé selon l'une des revendications précédentes, avec lequel l'au moins un état de fonctionnement est signalé en retour et/ou représenté sur l'au moins une durée.

8. Procédé selon l'une des revendications précédentes, avec lequel un mode de conduite favorable du véhicule hybride est déterminé à l'aide de l'au moins un état de fonctionnement.

9. Procédé selon l'une des revendications précédentes, avec lequel une comparaison avec au moins un état de fonctionnement mémorisé est effectuée à l'aide de l'au moins un état de fonctionnement.

10. Véhicule hybride comprenant une unité à processeur et/ou un arrangement de circuit logique au moins câblé à demeure, lequel est conçu de telle sorte que le procédé selon l'une des revendications précédentes peut être mis en œuvre.
